# EUROPÄISCHE PATENTSCHRIFT

(11) **EP 1 911 651 B1**
(45) Veröffentlichungstag und Bekanntmachung des Hinweises auf die Patenterteilung: **22.12.2010**
(21) Anmeldenummer: 07117313.2
(22) Anmeldetag: 27.09.2007
(51) Int. Cl.: B60W 50/08, B60W 30/16

(54) **Verfahren zur Steuerung einer Mensch/Maschine-Schnittstelle für eine adaptive Geschwindigkeitsregelvorrichtung**
Method for controlling a man/machine interface for an adaptive cruise control device
Procédé de commande d'une interface homme/machine pour un dispositif de régulation de vitesse adaptatif

(30) Priorität: 09.10.2006 DE 102006047603
(43) Veröffentlichungstag der Anmeldung: 16.04.2008
(73) Patentinhaber: ROBERT BOSCH GMBH, 70442 Stuttgart (DE)
(72) Erfinder: Sarrazin, Roland, 70195 Stuttgart-Botnang (DE); Hoetzer, Dieter, Farmington Hills, MI 48331 (US); Hellmann, Manfred, 71706 Hardthof (DE); Kroehnert, Andre, 71672 Marbach (DE)

(56) Entgegenhaltungen:
- EP-A- 1 609 658
- EP-A- 1 702 786
- EP-A1- 1 304 251
- WO-A-03/076226
- DE-A1- 10 320 722
- DE-A1-102004 006 200
- DE-A1-102004 031 833
- US-A1- 2005 006 165

## Beschreibung

### Stand der Technik

Die Erfindung betrifft ein Verfahren zur Steuerung einer Mensch/Maschine-Schnittstelle für eine adaptive Geschwindigkeitsregelvorrichtung. Des weiteren betrifft die Erfindung ein Computerprogramm und ein Computerprogrammprodukt, um ein derartiges Verfahren auszuführen sowie eine adaptive Geschwindigkeitsregelvorrichtung für Kraftfahrzeuge.

Für Kraftfahrzeuge sind Geschwindigkeitsregelsysteme bekannt, mit denen die Geschwindigkeit des Fahrzeugs auf eine von dem Fahrer gewählte Wunschgeschwindigkeit geregelt werden kann. Darüber hinaus kann mit Hilfe eines Abstandssensors, beispielsweise mit Hilfe eines Radar- oder Lidar-Sensors, der Abstand zu einem vorausfahrenden Fahrzeug gemessen werden. Die Geschwindigkeitsregelung wird dann so modifiziert, dass ein vorgegebener, vorzugsweise geschwindigkeitsabhängiger Abstand zu dem als Zielobjekt ausgewählten vorausfahrenden Fahrzeug eingehalten wird. Solche Systeme werden auch als adaptive Geschwindigkeitsregelvorrichtungen / -systeme bzw. ACC(Adaptive Cruise Control)-Systeme bezeichnet. In der Publikation der Robert Bosch GmbH "Adaptive Fahrgeschwindigkeitsregelung ACC, Gelbe Reihe, Ausgabe 2002, Technische Unterrichtung" sind derartige adaptive Geschwindigkeitsregelvorrichtungen beschrieben.

Da ein ACC-System in erster Linie dazu dient, den Fahrer zu entlasten und den Komfort zu erhöhen, werden diese Systeme häufig bei Fahrzeugen mit Automatikgetriebe eingesetzt, bei denen durch die automatische Wahl der Getriebestufe eine weitere Entlastung des Fahrers erreicht wird. Des weiteren sind Geschwindigkeitsregelsysteme oder, spezieller, ACC-Systeme auch bei Fahrzeugen mit Handschaltgetriebe bekannt, ebenso bei Fahrzeugen mit einem elektronischen Schaltgetriebe oder mit einem Automatikgetriebe, bei dem zwar die Kupplungs- und Gangwechselvorgänge automatisch ablaufen, aber der Fahrer die Wahl hat, durch einen von Hand eingegebenen Befehl selbst die Getriebestufe bzw. den Getriebegang zu bestimmen. Der Begriff "Handschaltgetriebe" ist deshalb hier in einem umfassenden Sinne zu verstehen und schließt alle Arten von Getriebe ein, bei denen der Fahrer durch Eingabe eines Befehls direkt auf die Wahl der Getriebestufe Einfluss nehmen kann. Eine Geschwindigkeitsregelvorrichtung für Kraftfahrzeuge mit Handschaltgetriebe ist aus der DE 102 10 545 A1 bekannt.

Die EP 1 609 658 A1 ist als nächstliegenden Stand der Technik nach der Oberbegriff des Anspruchs 1 zu sehen und betrifft ein Verfahren und eine Vorrichtung zum automatischen Anfahren eines mit einer Objektsensorik und einem adaptiven Abstands- und Geschwindigkeitsregler ausgestatteten Fahrzeugs mit Handschaltgetriebe aus dem Stillstand, bei modern der Fahrer zur Durchführung des Anfahrvorgangs lediglich das Kupplungspedal betätigen muss und in Abhängigkeit eines Kupplungsbetätigungssignals die Bremse gelöst und die Motordrehzahl geregelt wird.

In der EP 1 304 251 A1 ein Geschwindigkeitsregelsystem mit Abstandssensorik für ein Kraftfahrzeug angegeben, welches nicht nur bei höheren Fahrgeschwindigkeiten, sondern auch im Stop&Go-Betrieb automatisch die Einhaltung eines Mindestabstands zu einem vorausfahrenden Fahrzeug, das vom System als ein Zielobjekt erkannt ist, gewährleistet. Dabei stellt sich für den Fahrer des Kraftfahrzeugs eine einheitliche Systemstruktur dar, die nicht offensichtlich in verschiedene Geschwindigkeitsbereiche unterteilt ist, obwohl das Geschwindigkeitsregelsystem im Stop&Go-Betrieb auf einige RandBedingungen anders reagiert als bei höheren Fahrgeschwindigkeiten. So ist nach Erreichen des Fahrzeugstillstands durch einen automatischen Abbremsvorgang das System nur durch eine komplexe Handlung des Fahrers abschaltbar und nicht durch eine einfache Betätigung der Betriebsbremse oder des Gaspedals. Andererseits ist das System aus dem Fahrzeugstillstand heraus bei vom Fahrer betätigter Betriebsbremse aktivierbar. Schließlich wird im Stop&Go-Bereich mit Erkennen eines sich in der voraussichtlichen Fahrspur befindenden stehenden Zielobjekts eine automatische Abbremsung mit im wesentlichen konstanter Verzögerung eingeleitet, wobei gleichzeitig der Fahrer auf diese Situation, in der mit Ausnahme der genannten Abbremsung das Geschwindigkeitsregelsystem abgeschaltet wird, hingewiesen wird.

### Offenbarung der Erfindung

Der vorliegenden Erfindung liegt die Aufgabe zugrunde, eine komfortable Mensch/Maschine-Schnittstelle für eine adaptive Geschwindigkeitsregelvorrichtung mittels eines Verfahrens, eines Computerprogramms und eines Computerprogrammprodukts der eingangs erwähnten Art zu schaffen.

Diese Aufgabe wird erfindungsgemäß durch die in Anspruch 1 genannten Merkmale gelöst.

Durch die erfindungsgemäßen Maßnahmen werden die Interaktionen des Fahrers mit der adaptiven Geschwindigkeitsregelvorrichtung umfassend, harmonisch und transparent gestaltet.
- Dabei wird dem Fahrer durch wenigstens eine Ausgabeeinrichtung wenigstens die Information ausgegeben, ob ein manuelles Anfahren oder ein automatisches Anfahren durch die adaptive Geschwindigkeitsregelvorrichtung aufgrund einer momentanen Verkehrssituation möglich ist oder nicht, wobei die Information dann an den Fahrer ausgegeben wird, wenn er der adaptiven Geschwindigkeitsregelvorrichtung einen Anfahrwunsch mitteilt.

Vorteilhafte Ausgestaltungen und Weiterbildungen der Erfindung ergeben sich aus den Unteransprüchen.

Dem Fahrer kann durch die wenigstens eine Ausgabeeinrichtung bei einem durch die adaptive Geschwindigkeitsregelvorrichtung herbeigeführten Stillstand des Kraftfahrzeugs die Information ausgegeben werden, dass der Fahrer den Stillstand des Kraftfahrzeugs selbst aufrechterhalten muss.

Zusätzlich kann vorgesehen sein, dass bei Vorhandensein eines Kupplungspedals ein Anfahrwunsch des Fahrers der adaptiven Geschwindigkeitsregelvorrichtung durch ein Einkuppeln mit dem Kupplungspedal mitgeteilt wird.

Vorteilhaft ist, wenn dem Fahrer ausgegeben wird, dass er die automatische Anfahrhilfe der adaptiven Geschwindigkeitsregelvorrichtung ohne eingelegten Getriebegang bzw. eingelegte Getriebestufe oder mit einem von dem ersten Getriebegang verschiedenen Getriebegang verwenden möchte, was problematisch bzw. unmöglich wäre.

Die Anzeige kann mittels einer, insbesondere sanften, optischen Meldung und/oder einem, insbesondere gedämpften bzw. weichen, akustischen Signal und/oder einer haptischen Rückmeldung über das Kupplungspedal erfolgen.

Das erfindungsgemäße Verfahren zur Steuerung einer Mensch/Maschine-Schnittstelle (Human- / Man-Machine Interface - HMI / MMI) für eine adaptive Geschwindigkeitsregelvorrichtung für Kraftfahrzeuge mit Handschaltgetriebe ist vorzugsweise als Computerprogramm auf einer Steuereinrichtung der adaptiven Geschwindigkeitsregelvorrichtung, insbesondere einer HMI-Steuereinheit realisiert, wobei auch andere Lösungen selbstverständlich in Frage kommen. Dazu ist das Computerprogramm in einem Speicherelement der HMI-Steuereinheit gespeichert. Durch Abarbeitung auf einem Mikroprozessor der HMI-Steuereinheit wird das Verfahren ausgeführt. Das Computerprogramm kann auf einem computerlesbaren Datenträger (Diskette, CD, DVD, Festplatte, USB-Memorystick, Speicherkarte oder dergleichen) oder einem Internetserver als Computerprogrammprodukt gespeichert sein und von dort aus in das Speicherelement der HMI-Steuereinheit übertragen werden. Ein derartiges Computerprogramm bzw. Computerprogrammprodukt mit Programmcodemitteln ist in Anspruch 8 bzw. Anspruch 9 angegeben.

Anspruch 10 betrifft eine adaptive Geschwindigkeitsregelvorrichtung.

Nachfolgend sind anhand der Zeichnungen Ausführungsbeispiele der Erfindung prinzipmäßig beschrieben.

### Kurzbeschreibung der Zeichnungen

Es zeigen:
- Figur 1: eine schematische Darstellung der wesentlichen Komponenten eines ACC- Systems bzw. einer adaptiven Geschwindigkeitsregelvorrichtung in einem Kraftfahrzeug;
- Figur 2: ein vereinfachtes Blockdiagramm von Komponenten eines ACC-Systems;
- Figur 3: eine prinzipmäßige Darstellung einer ersten Ausgabe des ACC-Systems an den Fahrer;
- Figur 4: eine prinzipmäßige Darstellung einer zweiten Ausgabe des ACC-Systems an den Fahrer;
- Figur 5: eine prinzipmäßige Darstellung einer dritten Ausgabe des ACC-Systems an den Fahrer;
- Figur 6: eine prinzipmäßige Darstellung einer vierten Ausgabe des ACC-Systems an den Fahrer; und
- Figur 7: ein vereinfachtes Blockdiagramm von möglichen Fahrerinteraktionen.

### Beschreibung von Ausführungsbeispielen

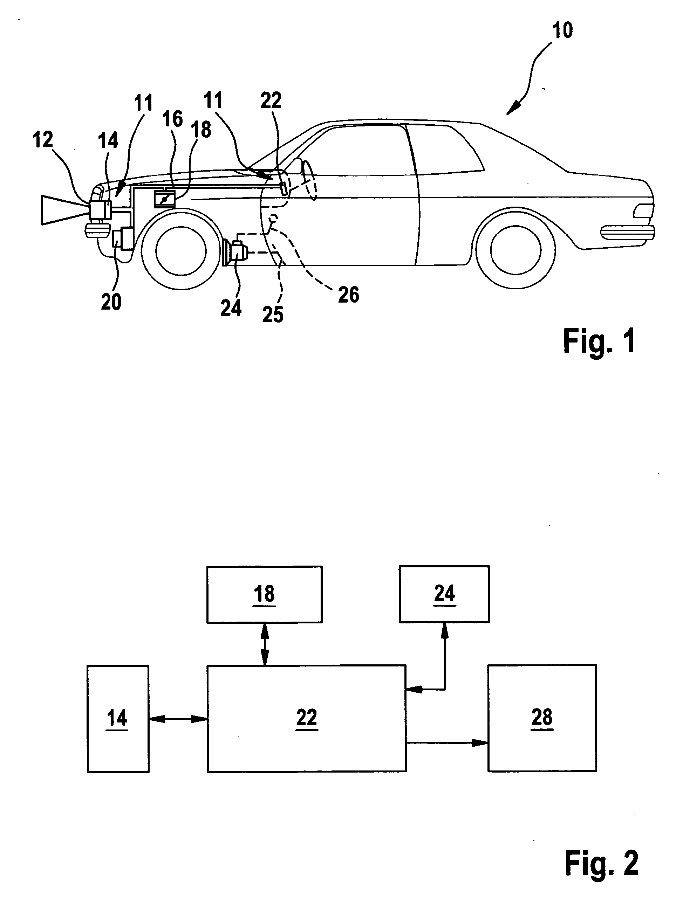

Das in Fig. 1 gezeigte Kraftfahrzeug 10 mit einem ACC-System bzw. einer adaptiven Geschwindigkeitsregelvorrichtung 11 weist als Abstandssensor 12 einen an der Frontpartie des Kraftfahrzeugs 10 angebrachten Radarsensor auf, in dessen Gehäuse auch eine ACC-Steuereinheit 14 untergebracht ist. Die ACC-Steuereinheit 14 ist über einen Datenbus 16 (CAN, MOST oder dergleichen) mit einer elektronischen Antriebs-Steuereinheit 18, einer Bremssystem-Steuereinheit 20 sowie mit einer HMI-Steuereinheit 22 einer Mensch/Maschine-Schnittstelle verbunden. In weiteren nicht dargestellten Ausführungsbeispielen könnten die ACC-Steuereinheit 14 und die HMI-Steuereinheit 22 auch in einer Steuereinrichtung der adaptiven Geschwindigkeitsregelvorrichtung 11, insbesondere in einem gemeinsamen Gehäuse integriert sein.

Der Abstandssensor 12 misst mit Hilfe eines Mehrstrahlradars die Abstände, Relativgeschwindigkeiten und Azimutwinkel von vor dem Fahrzeug befindlichen Objekten, die Radarwellen reflektieren. Die in regelmäßigen Zeitabständen, z. B. alle 10 ms empfangenen Rohdaten werden in der ACC-Steuereinheit 14 ausgewertet, um einzelne Objekte zu identifizieren und zu verfolgen und um insbesondere ein unmittelbar auf der eigenen Fahrspur vorausfahrendes Fahrzeug zu erkennen und als Zielobjekt auszuwählen. Durch Befehle an die Antriebs-Steuereinheit 18 und die Bremssystem-Steuereinheit 20 regelt die ACC-Steuereinheit 14 als Einrichtung zur Bestimmung des Beschleunigungs- und Verzögerungsbedarfs die Geschwindigkeit des Fahrzeugs 10. Die Mensch/Maschine-Schnittstelle, die durch die HMI-Steuereinheit 22 gesteuert wird, umfasst verschiedene Bedienungs- und Anzeigeelemente im Innenraum bzw. auf dem Armaturenbrett des Kraftfahrzeugs 10 und dient unter anderem dazu, Bedienbefehle des Fahrers an die ACC-Steuereinheit 14 zu übermitteln und Meldungen der ACC-Steuereinheit 14 an den Fahrer auszugeben. Zu diesem Zweck kann die HMI-Steuereinheit 22 auch einen Lautsprecherausgang für akustische Signale oder synthetische Sprache aufweisen. Wenn kein vorausfahrendes Fahrzeug geortet wird, regelt die ACC-Steuereinheit 14 die Geschwindigkeit des Fahrzeugs 10 auf eine vom Fahrer gewählte Wunschgeschwindigkeit. Ist dagegen ein vorausfahrendes Fahrzeug, dessen Geschwindigkeit kleiner ist als die des eigenen Fahrzeugs, als Zielobjekt erfasst worden, so wird die Geschwindigkeit des Kraftfahrzeugs 10 so geregelt, dass ein angemessener Abstand zu dem vorausfahrenden Fahrzeug eingehalten wird. Im gezeigten Beispiel weist das Kraftfahrzeug 10 ein Handschaltgetriebe 24 mit einem Kupplungspedal 25 und einem Schalthebel 26 auf. Die HMI-Steuereinheit 22 wird beispielsweise durch einen Mikrocomputer mit einem Mikroprozessor gebildet und ist grundsätzlich so programmiert, dass sie eine Schaltaufforderung an den Fahrer ausgibt, wenn die von Hand gewählte Getriebestufe nicht optimal ist.

Wie Fig. 2 zeigt, erhält die HMI-Steuereinheit 22 verschiedene Signale (durch entsprechende Pfeile angedeutet) von der ACC-Steuereinheit 14 und von der Antriebs-Steuereinheit 18. Außerdem erhält sie von dem Handschaltgetriebe 24 ein Signal, das die derzeit eingelegte Getriebestufe angibt (bzw. berechnet ein derartiges Signal mittelbar über entsprechende Verhältnisse) und ein Signal, welches dem momentanen Zustand des Kupplungspedals 25 entspricht. Anhand dieser Informationen entscheidet die HMI-Steuereinheit 22, ob über eine Anzeige- bzw. Ausgabeeinrichtung 28 eine Schaltaufforderung für eine andere Getriebestufe bzw. einen anderen Getriebegang an den Fahrer auszugeben ist oder nicht. Die Ausgabeeinrichtung 28 ist beispielsweise auf dem Armaturenbrett des Fahrzeugs angeordnet und kann in einer Leuchtanzeige bestehen, die in ein anderes Anzeigeinstrument, beispielsweise den Tachometer, Drehzahlmesser oder dergleichen integriert ist.

Das erfindungsgemäße Verfahren zur Steuerung der Mensch/Maschine-Schnittstelle für die adaptive Geschwindigkeitsregelvorrichtung 11 des Kraftfahrzeugs 10 ist als Computerprogramm auf der HMI-Steuereinheit 22 realisiert. Dazu ist das Computerprogramm in einem nicht dargestellten Speicherelement der HMI-Steuereinheit 22 gespeichert. Durch Abarbeitung auf dem Mikroprozessor des HMI-Steuereinheit 22 wird das Verfahren ausgeführt. Das Computerprogramm kann auf einem computerlesbaren Datenträger (Diskette, CD, DVD, Festplatte, USB-Memorystick, Speicherkarte oder dergleichen) oder einem Internetserver als Computerprogrammprodukt gespeichert sein und von dort aus in das Speicherelement der HMI-Steuereinheit 22 übertragen werden. Nachfolgend werden nur die erfindungsrelevanten Funktionen des erfindungsgemäßen Verfahrens zur Steuerung der Mensch/Maschine-Schnittstelle näher betrachtet. Selbstverständlich werden im Rahmen des erfindungsgemäßen Verfahrens beispielsweise die vorstehend erwähnte Ausgabe der Schaltaufforderungen und weitere Funktionen ausgeführt.

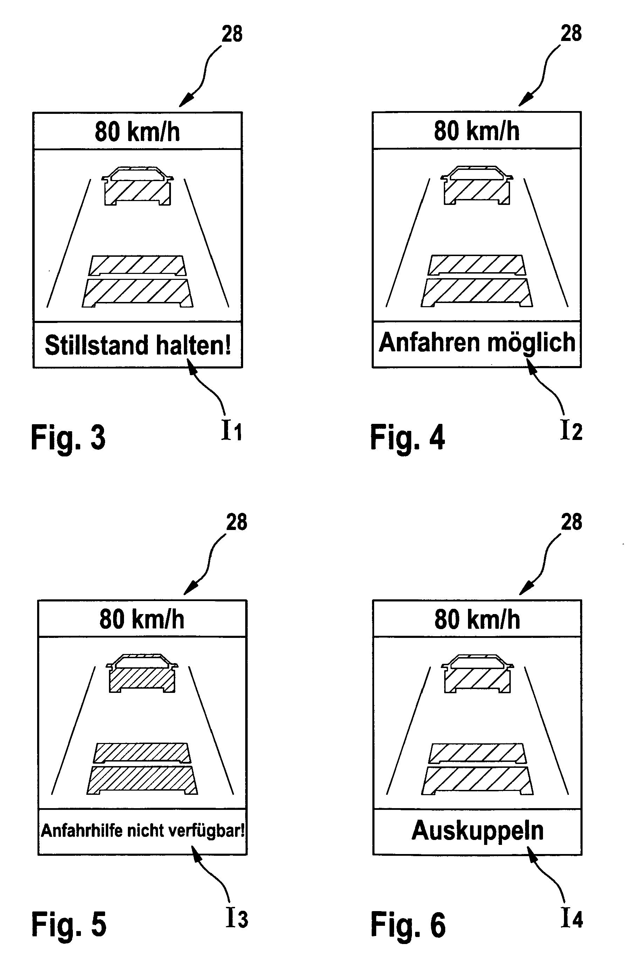

Bei dem erfindungsgemäßen Verfahren zur Steuerung der Mensch/Maschine-Schnittstelle für die adaptive Geschwindigkeitsregelvorrichtung 11 mit Abstandsregelfunktion und Stop & Go-Funktion für das Kraftfahrzeug 10 mit Handschaltgetriebe 24 werden dem Fahrer durch die Ausgabeeinrichtung 28 je nach Fahrsituation die nachfolgenden Informationen ausgegeben. Diese sind beispielhaft in den Figuren 3 bis 6 angegeben, in welchen die Ausgabeeinrichtung 28 ausschnittsweise dargestellt ist. Im oberen Bereich der Ausgabeeinrichtung 28 ist dabei die momentan durch die adaptive Geschwindigkeitsregelvorrichtung 11 einzuregelnde Geschwindigkeit mit 80 km/h beispielhaft angegeben.

Wie aus Fig. 3 ersichtlich, wird bei einem durch die adaptive Geschwindigkeitsregelvorrichtung 11 herbeigeführten Stillstand des Kraftfahrzeugs 10 die Information 11 ausgegeben, dass der Fahrer den Stillstand des Kraftfahrzeugs selbst aufrechterhalten muss. Dies geschieht durch die Ausgabe "Stillstand halten!" auf der Ausgabeeinrichtung 28. Wenn das Kraftfahrzeug 10 steht, übernimmt im Normalfall die Bremse das Halten im Stillstand. Sollte das Bremssystem dies jedoch nicht dauerhaft bewerkstelligen können (z. B. aufgrund zu hoher mechanischer Belastung), wird der Fahrer durch die Information 11 aufgefordert, selbst für den Stillstand zu sorgen. Dies kann kurz vor dem Wiederöffnen der Bremse erfolgen. Hierfür eignen sich des weiteren die optischen bzw. schriftlichen Informationen "Bitte übernehmen!", "Bitte auf dem Bremspedal stehen!" oder "Bitte für Stillstand sorgen!". Derartige optische Aufforderungen können durch einen Warnton, d. h. akustisch über den Lautsprecherausgang ergänzt werden. Diese Aufforderung soll dem Fahrer nicht so kritisch erscheinen, wie eine Übernahmeaufforderung wegen Erreichens der Systemgrenzen (beispielsweise bei einer gefährlichen Annäherung oder dergleichen). Dementsprechend kann die Information I1 auf der Ausgabeeinrichtung 28 in einer von rot verschiedenen Farbe angezeigt bzw. ausgegeben werden (durch die einfache Schraffur angedeutet). Der Warnton kann ebenfalls gedämpfter, d. h. weniger aggressiv gewählt werden. Zusätzlich oder alternativ kann auch eine haptische Rückmeldung über das Kupplungspedal 25, welches in einer derartigen Situation zumeist vom Fahrer durchgetreten ist, erfolgen. Damit soll der Fahrer darauf hingewiesen werden, gleichzeitig das nicht dargestellte Bremspedal zu betätigen.

Wie aus Fig. 4 ersichtlich, wird abhängig von der momentanen Verkehrssituation bei einem Stillstand des Kraftfahrzeugs 10 als Information 12, insbesondere zu dem Zeitpunkt an dem der Fahrer einen Anfahrwunsch äußert, ausgegeben, ob ein manuelles oder automatisches Anfahren durch die adaptive Geschwindigkeitsregelvorrichtung 11, insbesondere aufgrund einer momentanen Verkehrssituation, möglich ist oder nicht. Wenn die Verkehrssituation es erlaubt, wird der Fahrer darüber informiert, dass er bzw. die automatische Anfahrhilfe der adaptiven Geschwindigkeitsregelvorrichtung 11 wieder anfahren kann. Dies kann über dieselben optischen, akustischen oder haptischen Mittel wie bei Information I1 realisiert werden, wobei als optische Meldungen dann "Bitte Anfahren!" oder "Anfahren möglich!" gewählt werden. Da auch diese Aufforderung als weniger kritisch einzustufen ist, sollte die entsprechende Meldung ebenfalls sanft und gedämpft ausgeführt werden.

Der Fahrer sollte ebenfalls bei Vorhandensein einer automatischen Anfahrhilfe als Information 13 darüber informiert werden, ob diese verfügbar ist, d. h. eingreifen würde, wenn er jetzt bei eingelegtem Getriebegang die Kupplung schließen würde oder nicht. Dies kann wiederum über eine optische Meldung erfolgen (z. B. "Anfahrregelung verfügbar" oder dergleichen). Dies kann dem Fahrer jedoch ebenfalls in einem Drehzahlmesser des Kraftfahrzeugs 10 mittels einer insbesondere leuchtend markierten Zieldrehzahl ausgegeben werden. Ein derartiger Hinweis gibt dann in vorteilhafter Weise auch Auskunft darüber welche Drehzahl die Anfahrhilfe passend zur aktuellen Situation einstellen würde. Alternativ kann der Fahrer wie aus Fig. 5 ersichtlich mit einem Hinweis "Anfahrhilfe nicht verfügbar!" davor gewarnt werden, dass die automatische Anfahrhilfe, insbesondere aufgrund von vorhandenen Zielobjekten bzw. Hindernissen, nicht aktiv ist, wenn er einkuppelt. Diese kritische Meldung kann beispielsweise mit einer roten Farbe in der Ausgabeeinrichtung 28 realisiert werden (in Fig. 5 durch die engere Schraffur angedeutet).

Wie aus Fig. 6 ersichtlich wird der Fahrer aufgefordert, auszukuppeln. Dies erfolgt über die optische Meldung "Auskuppeln!" als Information 14, welche bereits aus dem Stand der Technik bekannt ist. Folgt der Fahrer der Aufforderung nicht, schaltet sich die adaptive Geschwindigkeitsregelvorrichtung ab, z. B. mit der optischen Information "Abschaltung wegen Schutz des Motors vor Abwürgen!" oder dergleichen, um ein Abwürgen des Kraftfahrzeugmotors bei einer Verzögerung in Richtung Stillstand zu vermeiden.

Bei dem erfindungsgemäßen Verfahren wird ein Anfahrwunsch des Fahrers der adaptiven Geschwindigkeitsregelvorrichtung 11 auch durch ein Einkuppeln mit dem Kupplungspedal 25 mitgeteilt. Zusätzlich zum Gasgeben oder dem Drücken der Resume-Taste kann der Fahrer seinen Anfahrwunsch auch über das Loslassen des Kupplungspedals 25, welches er zu diesem Zeitpunkt durchgedrückt hat, bestätigen. Diese Funktion ist besonderes vorteilhaft in Kombination mit einer Getriebestufen- bzw. Leerlauferkennung, da ein Anfahren über Kupplung nur mit eingelegtem Gang sinnvoll ist. Dem Fahrer wird angezeigt, dass er die Anfahrhilfe ohne eingelegten Getriebegang oder mit einem von dem ersten Getriebegang verschiedenen Getriebegang verwenden möchte.

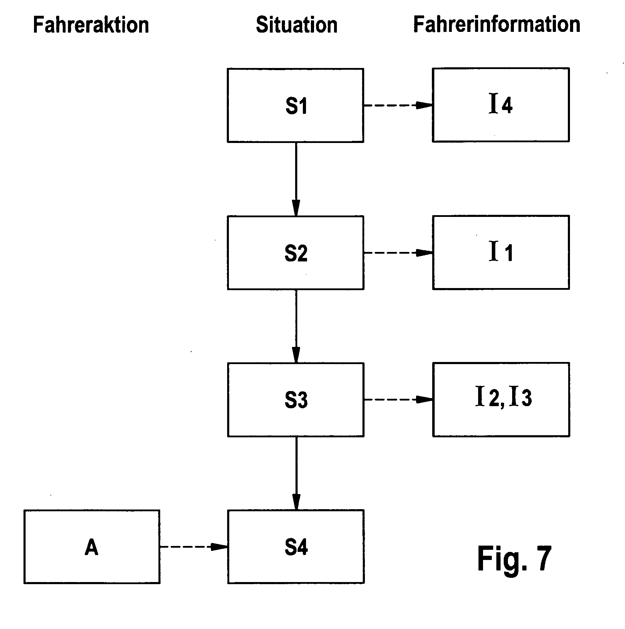

In Fig. 7 sind Fahrerinteraktionen im Zusammenhang mit den möglichen Fahrsituationen dargestellt. Dabei sind rechts im Blockdiagramm die Fahreraktionen, in der Mitte die Fahrsituationen und links die zugehörigen Fahrerinformationen dargestellt. Die Interaktionen betreffen im wesentlichen das Anhalten und das Wiederanfahren, welches vollständig vom Fahrer übernommen oder von der adaptiven Geschwindigkeitsregelvorrichtung 11 unterstützt werden kann, indem der Fahrer lediglich bei eingelegtem ersten Gang einkuppelt und die adaptive Geschwindigkeitsregelvorrichtung 11 als automatische Anfahrhilfe für das passende Gasgeben sorgt. In einer Fahrsituation S 1 verzögert die adaptive Geschwindigkeitsregelvorrichtung 11 das Kraftfahrzeug in Richtung Stillstand, wobei der Fahrer gegebenenfalls die Information 14 erhält, dass er auskuppeln muss. In einer Fahrsituation S2 hat die adaptive Geschwindigkeitsregelvorrichtung 11 das Kraftfahrzeug 10 zum Stillstand gebracht, wobei der Fahrer gegebenenfalls die Information 11 erhält, dass er den Stillstand des Kraftfahrzeugs 10 selbst aufrechterhalten muss. In einer Fahrsituation S3 hat die adaptive Geschwindigkeitsregelvorrichtung 11 erkannt, dass ein Anfahren wieder möglich ist, wobei der Fahrer die Informationen 12 und/oder 13 erhält, dass ein Anfahren wieder möglich ist und ob dieses automatisch erfolgen kann oder nicht. Auf eine Bestätigung A des Anfahrwunsches durch den Fahrer sorgt die adaptive Geschwindigkeitsregelvorrichtung 11 für ein Anfahren des Kraftfahrzeugs 10 in eine Fahrsituation S4.

## Patentansprüche

1. Verfahren zur Steuerung einer Mensch/Maschine-Schnittstelle für eine adaptive Geschwindigkeitsregelvorrichtung (11) mit Abstandsregelfunktion und Stop & Go-Funktion für Kraftfahrzeuge (10) mit Handschaltgetriebe (24), wobei dem Fahrer durch wenigstens eine Ausgabeeinrichtung (28) bei einem Stillstand des Kraftfahrzeugs (10) wenigstens die Information (12) ausgegeben wird, ob ein manuelles Anfahren oder ein automatisches Anfahren durch die adaptive Geschwindigkeitsregelvorrichtung (11) aufgrund einer momentanen Verkehrssituation möglich ist oder nicht (12), **dadurch gekennzeichnet, dass** die Information dann an den Fahrer ausgegeben wird, wenn er der adaptiven Geschwindigkeitsregelvorrichtung (11) einen Anfahrwunsch mitteilt.

2. Verfahren nach Anspruch 1, **dadurch gekennzeichnet, dass** dem Fahrer durch die wenigstens eine Ausgabeeinrichtung (28) bei einem durch die adaptive Geschwindigkeitsregelvorrichtung (11) herbeigeführten Stillstand des Kraftfahrzeugs (10) die Information (I1) ausgegeben wird, dass der Fahrer den Stillstand des Kraftfahrzeugs (10) selbst aufrechterhalten muss (I1).

3. Verfahren nach Anspruch 1 oder 2, **dadurch gekennzeichnet, dass** dem Fahrer ausgegeben wird, dass er die automatische Anfahrhilfe der adaptiven Geschwindigkeitsregelvorrichtung (11) ohne eingelegten Getriebegang oder mit einem von dem ersten Getriebegang verschiedenen Getriebegang verwenden möchte.

4. Verfahren nach Anspruch 1, 2 oder 3, **dadurch gekennzeichnet, dass** die Verfügbarkeit der automatischen Anfahrhilfe der adaptiven Geschwindigkeitsregelvorrichtung (11) dem Fahrer in einem Drehzahlmesser des Kraftfahrzeugs (10) mittels einer markierten Zieldrehzahl ausgegeben wird.

5. Verfahren nach einem der Ansprüche 1 bis 4, **dadurch gekennzeichnet, dass** die Ausgabe mittels einer haptischen Rückmeldung über das Kupplungspedal (25) erfolgt.

6. Verfahren nach Anspruch 5, **dadurch gekennzeichnet, dass** die Ausgabe mittels einer, insbesondere sanften, optischen Meldung (I1,I2,I3,I4) und/oder - einem, insbesondere gedämpften, akustischen Signal erfolgt.

7. Verfahren nach einem der Ansprüche 1 bis 6, **dadurch gekennzeichnet, dass** bei Vorhandensein eines Kupplungspedals (25) ein Anfahrwunsch des Fahrers der adaptiven Geschwindigkeitsregelvorrichtung (11) durch ein Einkuppeln mit dem Kupplungspedal (25) mitgeteilt wird.

8. Computerprogramm mit Programmcodemitteln, um ein Verfahren zur Steuerung einer Mensch/Maschine-Schnittstelle gemäß einem der Ansprüche 1 bis 7 durchzuführen, wenn dass Programm auf einem Mikroprozessor eines Mikrocomputers, insbesondere auf einer Steuereinrichtung (22) der adaptiven Geschwindigkeitsregelvorrichtung (11), ausgeführt wird.

9. Computerprogrammprodukt mit Programmcodemitteln, die auf einem computerlesbaren Datenträger gespeichert sind, um ein Verfahren zur Steuerung einer Mensch/Maschine-Schnittstelle gemäß einem der Ansprüche 1 bis 7 durchzuführen, wenn dass Programm auf einem Mikroprozessor eines Mikrocomputers, insbesondere auf einer Steuereinrichtung (22) der adaptiven Geschwindigkeitsregelvorrichtung (11), ausgeführt wird.

10. Adaptive Geschwindigkeitsregelvorrichtung (11) für Kraftfahrzeuge (10) mit Handschaltgetriebe (24), mit einer Einrichtung (14) zur Bestimmung des Beschleunigungsbedarfs, einer Ausgabeeinrichtung (28) zur Ausgabe von Informationen (I1,I2,I3,I4) an den Fahrer, sowie einer Steuereinrichtung (22) hierfür, **dadurch gekennzeichnet, dass** die Steuereinrichtung (22) zur Ausführung eines Computerprogramms gemäß Anspruch 8 zur Durchführung eines Verfahrens zur Steuerung einer Mensch/Maschine-Schnittstelle eingerichtet ist.

## Claims

1. Method for controlling a man/machine interface for an adaptive cruise control device (11) having a distance control function and a Stop & Go function for motor vehicles (10) with a manual shift gearbox (24), wherein when the motor vehicle (10) is stationary at least the information (12) as to whether or not manual starting or automatic starting is possible (12) by means of the adaptive cruise control device (11) on the basis of a current traffic situation is output to the driver by at least one output device (28), **characterized in that** the information is output to the driver when he sends a starting request to the adaptive cruise control device (11).

2. Method according to Claim 1, **characterized in that** when the motor vehicle (10) is in a stationary state brought about by the adaptive cruise control device (11), the information (I1) indicating that the driver himself has to maintain (I1) the stationary state of the motor vehicle (10) is output to the driver by the at least one output device (28).

3. Method according to Claim 1 or 2, **characterized in that** information is output to the driver indicating that he would like to use the automatic starting aid of the adaptive cruise control device (11) without a gear speed engaged or with a gear speed which is different from the first gear speed.

4. Method according to Claim 1, 2 or 3, **characterized in that** the availability of the automatic starting aid of the adaptive cruise control device (11) is output to the driver in a rev counter of the motor vehicle (10) by means of a marked target rotational speed.

5. Method according to one of Claims 1 to 4, **characterized in that** the outputting is carried out by means of a haptic feedback via the clutch pedal (25).

6. Method according to Claim 5, **characterized in that** the outputting is carried out by means of a visual message (I1, I2, I3, I4), in particular a gentle one, and/or an, in particular damped, acoustic signal.

7. Method according to one of Claims 1 to 6, **characterized in that** given the presence of a clutch pedal (25) a starting request of the driver is sent to the adaptive cruise control device (11) by engaging the clutch with the clutch pedal (25).

8. Computer program with program code means for carrying out a method for controlling a man/machine interface according to one of Claims 1 to 7, when the program is carried out on a microprocessor of a microcomputer, in particular on a control device (22) of the adaptive cruise control device (11).

9. Computer program product with program code means which are stored on a computer-readable data carrier, in order to carry out a method for controlling a man/machine interface according to one of Claims 1 to 7, when the program is carried out on a microprocessor of a microcomputer, in particular on a control device (22) of the adaptive cruise control device (11).

10. Adaptive cruise control device (11) for motor vehicles (10) with a manual shift gearbox (24), with a device (14) for determining the acceleration requirement, an output device (28) for outputting information (I1, I2, I3, I4) to the driver, and a control device (22) for this purpose, **characterized in that** the control device (22) is configured to carry out a computer program according to Claim 8 for carrying out a method for controlling a man/machine interface.

## Revendications

1. Procédé de commande d'une interface homme-machine d'un dispositif (11) de régulation adaptative de la vitesse à fonction de régulation de distance et fonction d'arrêt-démarrage pour véhicules (10) à boîte de transmission manuelle (24),
au moins une information (12) indiquant si un démarrage manuel ou un démarrage automatique par le dispositif (11) de régulation adaptative de la vitesse est ou non possible (12) compte tenu de la situation du trafic à cet instant étant délivrée au conducteur par au moins un dispositif émetteur (28) lorsque le véhicule automobile (10) est à l'arrêt,
**caractérisé en ce que**
l'information est délivrée au conducteur lorsqu'il transmet un souhait de démarrage au dispositif (11) de régulation adaptative de la vitesse.

2. Procédé selon la revendication 1, **caractérisé en ce que** l'information (I1) selon laquelle le conducteur doit maintenir lui-même (I1) le véhicule automobile (10) à l'arrêt est délivrée au conducteur par le ou les dispositifs émetteurs (28) lorsque le véhicule automobile (10) a été amené à l'arrêt par le dispositif (11) de régulation adaptative de la vitesse.

3. Procédé selon la revendication 1 ou 2, **caractérisé en ce que** le conducteur est informé qu'il peut utiliser l'accessoire de démarrage automatique du dispositif (11) de régulation adaptative de la vitesse sans qu'un rapport de transmission soit engagé ou lorsque le rapport de transmission engagé est différent du premier rapport de transmission.

4. Procédé selon la revendication 1, 2 ou 3, **caractérisé en ce que** la disponibilité de l'accessoire de démarrage automatique du dispositif (11) de régulation adaptative de la vitesse est transmise au conducteur sur le dispositif de mesure de régime du moteur du véhicule automobile (10) au moyen d'un régime de rotation marqué comme cible.

5. Procédé selon l'une des revendications 1 à 4, **caractérisé en ce que** la transmission s'effectue au moyen d'une rétroaction perceptible par l'intermédiaire de la pédale d'embrayage (25).

6. Procédé selon la revendication 5, **caractérisé en ce que** la transmission s'effectue au moyen d'un message visuel (I1, I2, I3, I4), en particulier doux, et/ou au moyen d'un signal acoustique, en particulier atténué.

7. Procédé selon l'une des revendications 1 à 6, **caractérisé en ce qu'**en cas de présence d'une pédale d'embrayage (25), un souhait de démarrage du conducteur est transmis au dispositif (11) de régulation adaptative de la vitesse par un engagement de la pédale d'embrayage (25).

8. Programme informatique doté de moyens de code de programme en vue d'exécuter un procédé de commande d'une interface homme-machine selon l'une des revendications 1 à 7, lorsque le programme est exécuté sur le microprocesseur d'un microordinateur, en particulier sur un dispositif de commande (22) du dispositif (11) de régulation adaptative de la vitesse.

9. Produit de programme informatique présentant des moyens de code de programme qui sont conservés en mémoire sur un support de données lisible par ordinateur pour exécuter un procédé de commande d'une interface homme-machine selon l'une des revendications 1 à 7, lorsque le programme est exécuté sur le microprocesseur d'un microordinateur, en particulier sur un dispositif de commande (22) du dispositif (11) de régulation adaptative de la vitesse.

10. Dispositif (11) de régulation adaptative de la vitesse pour véhicules automobiles (10) dotés d'une boîte de transmission manuelle (24), et présentant un système (14) de détermination de la nécessité d'une accélération, d'un dispositif émetteur (28) qui transmet des informations (I1, I2, I3, I4) au conducteur ainsi que d'un dispositif de commande (22) dans ce but,
**caractérisé en ce que**
le dispositif de commande (22) est conçu pour exécuter un programme informatique selon la revendication 8 en vue de mettre en oeuvre un procédé de commande d'une interface homme-machine.
